Europäisches Patentamt

European Patent Office

Office européen des brevets

(11) Publication number: 0 479 323 A2

# EUROPEAN PATENT APPLICATION

(21) Application number: 91116998.5

(22) Date of filing: 04.10.91

(51) Int. Cl.5: G06F 15/70

(30) Priority: 05.10.90 JP 269255/90

(43) Date of publication of application:
08.04.92 Bulletin 92/15

(84) Designated Contracting States:
DE FR GB

(71) Applicant: EZEL INC.
2-22-2 Koishikawa
Bunkyo-ku Tokyo 112(JP)
Applicant: SHARP CORPORATION
22-22, Nagaike-cho Abeno-ku
Osaka 545(JP)

(72) Inventor: Takahama, Kengo
c/o Sharp Corporation 22-22, Nagaike-cho,
Abeno-ku, Osaka 545(JP)
Inventor: Murakami, Tetsuya
c/o Sharp Corporation 22-22, Nagaike-cho,
Abeno-ku, Osaka 545(JP)

(74) Representative: Patentanwälte Grünecker,
Kinkeldey, Stockmair & Partner
Maximilianstrasse 58
W-8000 München 22(DE)

(54) Moving vector extractor.

(57) A moving vector extractor for extracting a moving vector from difference of brightness of representative points in different field. An indicator is calculated from the distance indicating the difference as a positive value. A basic data calculated from the indicator and accumulated. The moving vector is obtained from the positional relationship between the representative point and a local minimum in the accumulated data. The basic data is calculated through binarization of the indicator so as to improve the storage efficiency of the accumulated data.

Fig. 4

## FIELD OF THE INVENTION

This invention is related to the extraction technology of moving vector from an image signal for preventing VTR with a camera incorporated therein from shaking.

## BACKGROUND OF THE INVENTION

Conventionally, there have been various methods contrived for the extraction of moving vectors for indicating the direction and speed of a movement of an image. The direction and speed is calculated by dividing a given image into blocks of predetermined size and by calculating moving vector according to the relationship between successive image frames for each block. In such methods, there are gradient method concerning spatial and time gradient of brightness, phase correlation method in which phase terms ratio of coefficients of Fourier transformation is used, and representative point matching method in which the accumulated value of the absolute value of difference between frames at representative points in successive images is used. And "representative point matching method " used in MUSE encoder is an advantageous method because of smaller size of hardware necessary than that for the above methods.

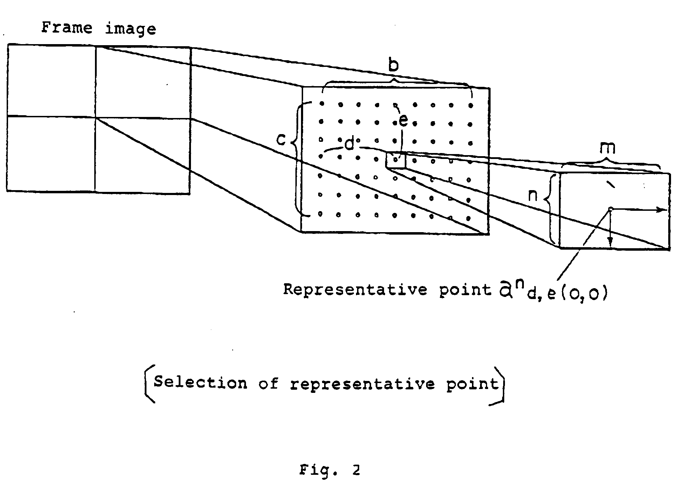

This representative point matching method will be explained in a case a given frame image is divided into four blocks as shown in Fig. 2 and a moving vector of one of those blocks is calculated. First, representative points whose number is calculated by $b \times c = p$ are selected, and the absolute value of the difference between frames is generated by a following formula using multi-value in a searching area of m pixels $\times$ n pixels.

$$p_{d,e}(i, j) = | a^n_{d,e}(i, j) - a^{n-1}_{d,e}(0,0) |$$

For each representative point, the sum of the accumulated value of $p_{d,e}(i, j)$ is calculated by a following formula

$$p(i, j) = \sum_e \sum_d p_{d,e}(i, j),$$

and the displacement value (i, j) that has the minimum value is considered as a moving vector. This is the representative matching method.

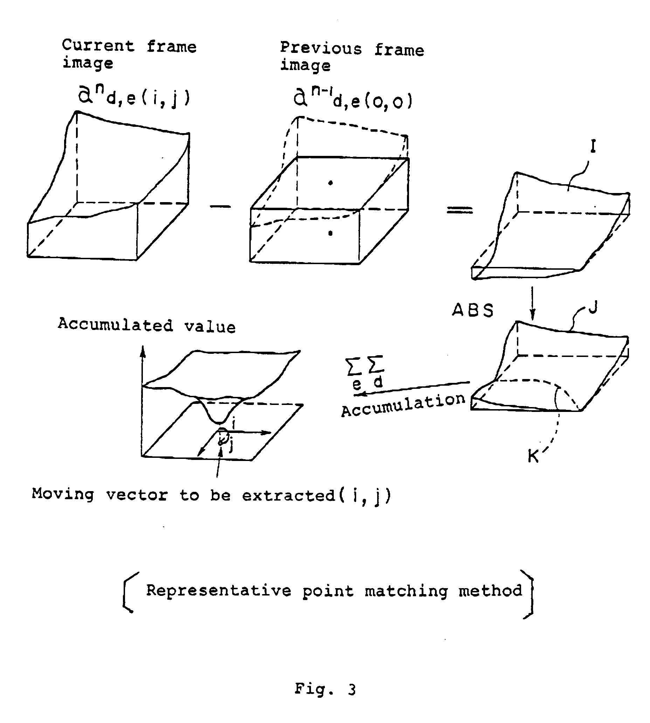

Fig. 3 describes the concept. As will be understood from this figure, by calculating the absolute value of the difference between frames (mark 1), a data for the absolute value of the difference including a curved line K whose value is 0 will be obtained, then by accumulating this data for the absolute value of the difference for each representative point, the accumulated value at the intersection of the curved line K will be the minimum value, and this is the position of the moving vector. It means the accumulation function p(i, j) will be a funnel-like concavity centering the moving vector position (i, j).

## SUMMARY OF THE INVENTION

However, for extracting moving vector of input image, accumulation memory needs to have multi-bit capacity for calculating the sum of the absolute value of the difference between frames in order to store the sum of multi-value, then the accumulation memory will have a lot of capacity. For example, when one moving vector is extracted, assuming the absolute value of the difference value corresponding to one representative point to be a bit, a searching area to be m pixel $\times$ n pixel and the accumulated time, i.e. the number of representative points to be p, the accumulation memory will need to be $(a + \sqrt{p})$ m $\times$ n bit.

The object of the present invention is to reduce the capacity of accumulation memory, and to make the scale of hardware small, with maintaining the precision of moving vector extraction.

A moving vector extractor according to the present invention is characterized by operation of binarization after operation of multi-value correlation and extraction of a displacement value that has the minimum or maximum value of the accumulated value of a binarized as a moving vector.

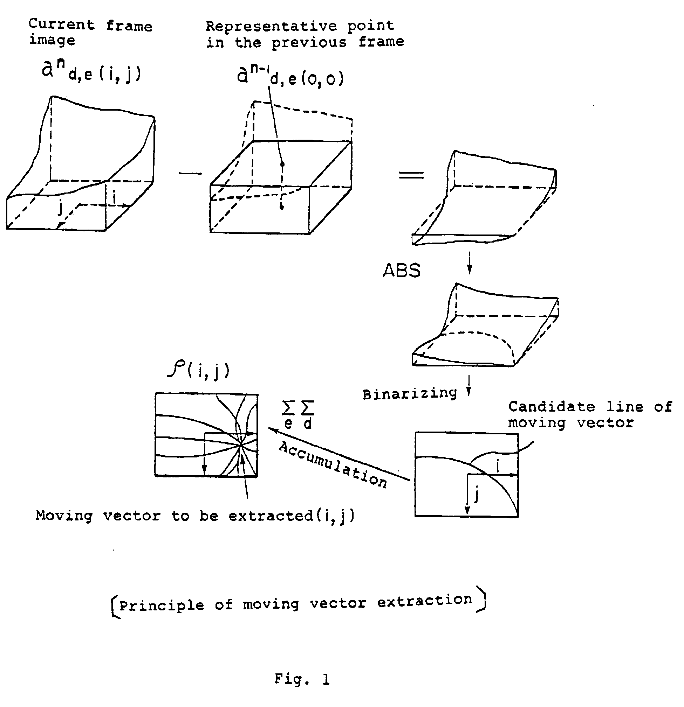

In a predetermined area of a given image, an absolute value or squared value is calculated of the difference between successive frames with predetermined time distance, and it is transformed into a line as candidates of moving vector through binarization as shown in Fig. 1, and the accumulated value for the concerned pixels of number of P is calculated, and the position that has the maximum or minimum value is calculated. This position is the cross point of candidate lines of moving vector and a moving vector will be extracted based on this position.

By binarizing, the capacity necessary for the accumulation memory becomes $(1 + \sqrt{p}) \times m \times n$ and can be reduced to $(1 + \sqrt{p}) / (a + \sqrt{p})$ compared to the conventional method.

## BRIEF DESCRIPTION OF THE DRAWINGS

Fig. 1 shows a principle of the present invention.
Fig. 2 shows the position of a representative point.
Fig. 3 shows a concept of representative point matching method.
Fig. 4 shows a block diagram of the first embodiment of the present invention.

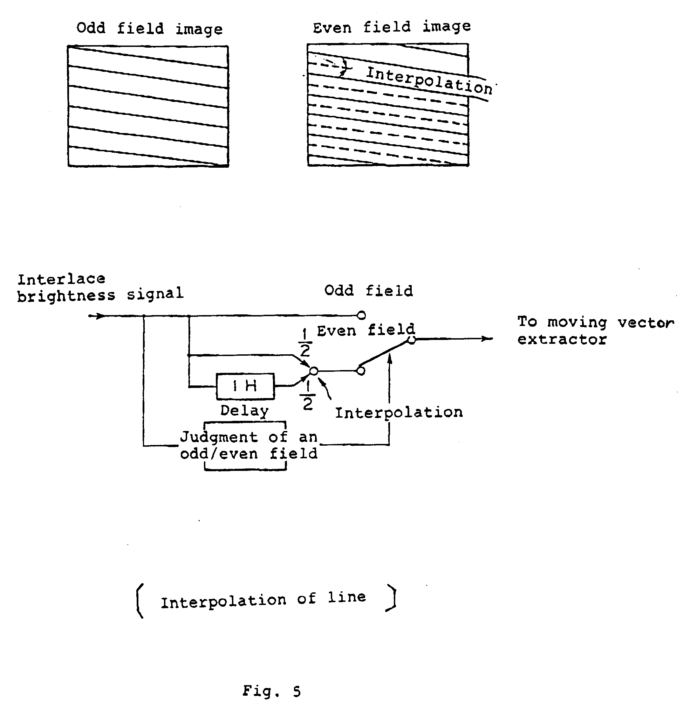

Fig. 5 shows a concept of interpolation of line in a field image.
Fig. 6 shows a block diagram of the second embodiment of the present invention.
Fig. 7 shows a block diagram of the third embodiment of the present invention.
Fig. 8 shows a block diagram of the forth embodiment of the present invention.

## PREFERRED EMBODIMENT OF THE PRESENT INVENTION

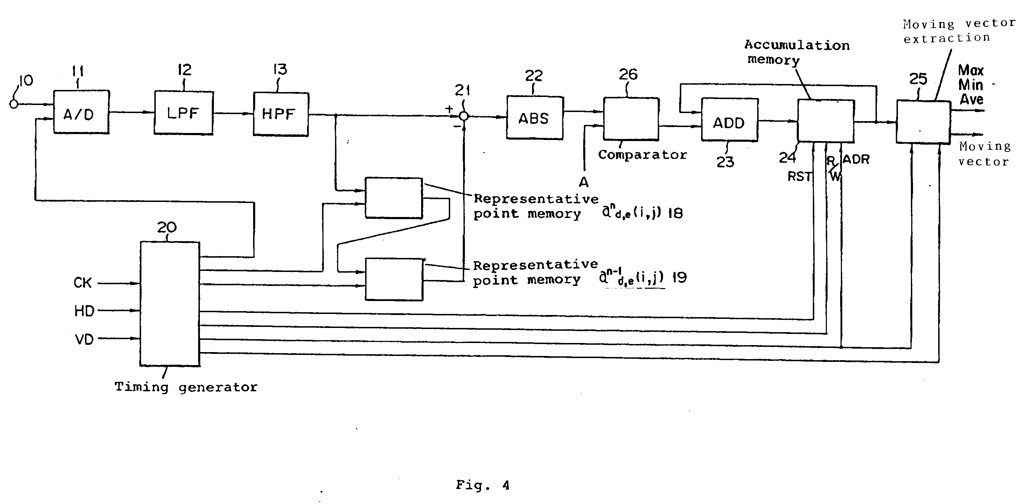

Hereinafter, an embodiment of the present invention will be described with referring to the attached drawings. Fig. 1 shows the principle of the present invention, Fig. 2 is a descriptive drawing showing a position of representative point and Fig. 4 is a block diagram of the first embodiment. As shown in Fig. 2, representative points aligned on b columns in the horizontal direction and on c lines in the vertical direction are selected, so that a rectangle block is defined by each representative point centered in the block. The block is a searching area of m pixels in the horizontal direction and n pixels in the vertical direction. The brightness of each representative point in the previous frame is stored in a memory. The brightness of representative point on dth column and eth row is denoted here as $a^{n-1}_{d,e}(0, 0)$. When the brightness of pixels around the representative point in the current frame is $a^n_{d,e}(i, j)$, the absolute value of the difference value $p_{d,e}(i, j)$ is calculated as below.

$$p_{d,e}(i, j) = | a^n_{d,e}(i, j) - a^{n-1}_{d,e}(0, 0) \qquad (1)$$

Fig. 1 illustratively shows the above concept. Points (i, j) satisfying $p_{d,e}(i, j) = 0$ are candidates giving moving vector, which candidates generally define a curved line.

This absolute value of the difference value is binarized by a threshold A. It means

when
$| a^n_{d,e}(i, j) - a^{n-1}_{d,e}(0, 0) | < A$,
$p_{d,e}(i, j) = 0$
when
$| a^n_{d,e}(i, j) - a^{n-1}_{d,e}(0, 0) | \geqq A$,
$p_{d,e}(i, j) = 1 \qquad (2)$

Since the information of the candidate line concerning moving vector is remained as it is even after binarization, multi-value information can be compressed into one bit, with maintaining the precision. A basic data of moving vector can be obtained for each representative point, and this basic data of moving vector has one candidate curved line of moving vector. The basic data of moving vector of total representative points of b rows × c columns are added in an accumulation memory, then an address (i, j) of the minimum of the accumulated value. The address (i, j) gives a moving vector.

$$p(i, j) = \sum_e \sum_d p_{d,e}(i, j) \qquad \dots (3)$$

moving vector $= (i, j) | p(i, j) = \min \qquad (4)$

In Fig. 4, an input terminal 10, to which image signal is given, is connected with a + input terminal of a subtracter 21 through an A/D convertor 11, low band pass filter 12 to reduce influence from noise, and high band pass filter to reduce influence from the change of brightness over the whole image. Output from high pass filter 13 is connected with - input terminal of subtracter 21 through representative memory 18 and 19, and the data of the representative memory will be transferred to memory 19 after registration in memory 18. Subtracter 21 and absolute value calculator 22 are provided for calculating correlation between two frames, and the absolute value calculator 22 is connected with comparator 26 for binarization. Adder 23 which accumulates and adds the binarized data is connected with comparator 23, and accumulation memory 24 is connected with adder 23. Extractor 25 is connected with accumulation memory 24 for extracting moving vector. Timing generator 20 counts clocks CK, horizontal synchronous signals and vertical synchronous signals that are inputted from outside, so as to generate control signals for such as A/D convertor 11, representative memory 18 and 19, accumulation memory 24 and extractor 25.

The method executed on the above system will be explained. First, analog image signals inputted from image input terminal 10 are quantized into 8 bits in A/D convertor 11, and unnecessary noises are temporally removed by low pass filter 12 and high pass filter 13, and outputted as brightness $a^n_{d,e}(i, j)$. Image signals whose noises are removed are stored in representative memory 18 as representative point $a^n_{d,e}(0, 0)$ of current frame at the timing generated by timing generator 20. The brightness of this representative point is transferred to representative memory 19 during the next vertical synchronous term, and outputted to subtracter 21 as representative point $a^{n-1}_{d,e}(0, 0)$ of previous frame. At this moment, addressing of representative memory 18 and 19, and read/write indication are operated by timing generator 21. As explained above, brightness signal $a^n_{d,e}(i, j)$ and $a^{n-1}_{d,e}(0, 0)$ are inputted into subtracter 21, and the difference is calculated ,then the absolute value of the difference

$$p_{d,e}(i, j) \ = \ |\ a^n_{d,e}(i, j) - a^{n-1}_{d,e}(0, 0)\ |$$

is calculated by absolute value system 22 in the next step. Output signal from absolute value system 22 is added to comparator 26, and binarized by threshold A using the above formula (2), and accumulated and added to accumulation memory 24 by adder 23. These series of calculation processing with respect to an image for one frame are completed, $p^n(i, j)$ corresponding to the address is given to accumulation memory 24, and address is extracted corresponding to $(i, j)$ that have $p^n(i, j)$ become the maximum or the minimum value by extractor 25 during the vertical synchronous term and outputted as moving vector. At this moment, timing such as read/write control signals from adder 23, accumulating and adding memory 24, and extractor 25 is controlled by time generator 20. Also this moving vector extractor 25 simultaneously extracts the maximum value, the minimum value and the mean value of the accumulated value, and outputs them. They are used as a parameter for judging the reliability of the moving vector extracted by such a microcomputer connected with the back step.

Here, the moving vector is extracted from the difference between two successive frame images, and the two frame images mean a combination of a previous odd field image and a current odd field image, or a combination of a previous even field image and a current even field image.

In stead of two successive frame images, successive field images may also be used. In this case, a moving vector is extracted from the difference between an odd field image and an even field image, or between an even field image and an odd field image. Since each field line of one of even and odd field image displaces from the field line of the other by a half of distance between successive field lines, interpolated lines between successive field lines are to be generated in one of odd or even field.

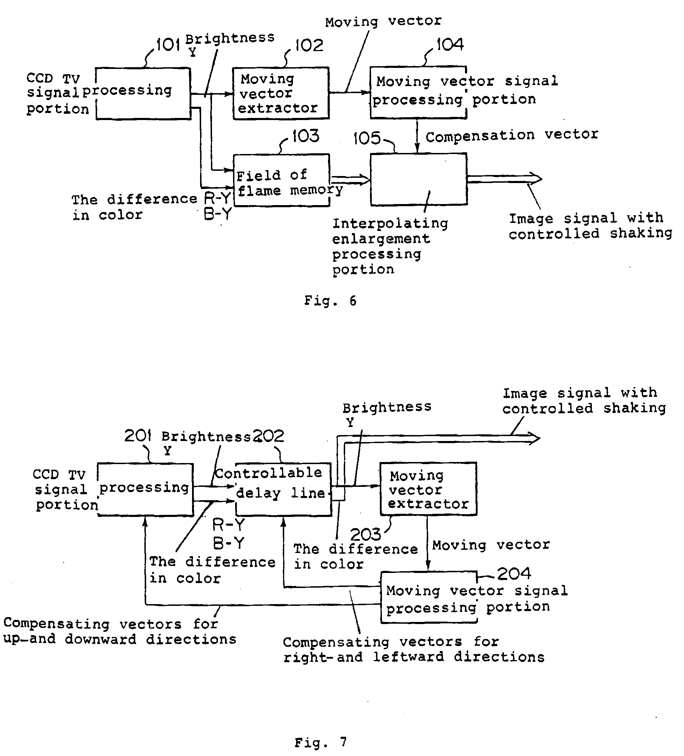

Fig. 6 describes the second embodiment of the present invention, and this is a compensation system for shaking of VTR with a camera incorporated therein which uses a moving vector extractor explained in the above first embodiment.

In this figure, 101 represents a CCD TV signal processing portion, 102 is a moving vector extractor, 103 is a field memory or frame memory for storing an image of the previous field or frame, 104 represents a moving vector signal processing portion which judges the reliability of a band filter for determining compensation frequency and of moving vector extraction, 105 represents an interpolating enlargement processing portion which enlarges a part of an image with interpolation stored in a field memory or a frame memory.

A brightness signal outputted from CCD TV signal processing portion 101 is inputted into moving vector extractor 102, and a moving vector is extracted from image signal of two successive fields or a frames. On the other hand, the brightness signal and a signal of color difference R-Y and B-Y outputted from CCD TV signal processing portion 101 are stored in a field or frame memory 103, and are partially enlarged in interpolating enlargement processing portion 105 after the delay of one field or one frame. At this moment, the moving vector extracted by moving vector extractor 102 is inputted into a control terminal of interpolating enlargement processing portion 105 through moving vector signal processing portion 104, and it is compensated for the amount of the extracted moving vectors that are elements of shaking, in upper and lower, right and left sides by interpolating enlargement processing portion 105 , and TV image signal, in

EP 0 479 323 A2

which the shaking is controlled, is obtained.

Fig. 7 shows the third embodiment of the present invention, and this is a compensation system for shaking of VTR with a camera incorporated therein, which uses a moving vector extractor explained in the above first embodiment.

CCD TV signal processing portion 201 controls the number of high speed output clocks accompanying vertical electric change translation , so the movement of an image upward, downward, rightward or leftward is also controllable by controllable delay 202. Brightness signal of an image outputted from CCD TV signal processing portion 201 is inputted into moving vector extractor 203 through controllable delay line 202, and a moving vector is extracted from image signal as well as in the operation of the second embodiment. The moving vector extracted is inputted into moving vector processing portion 204 and processing is performed there, in which the reliability is judged of a band filter for determining compensation frequency and of moving vector extraction. The compensating vectors for upward and downward directions are fed back to CCD TV signal processing portion 201, and compensating vectors for rightward and leftward directions are fed back to controllable delay line 202, and shaking is compensated through closed loop servo.

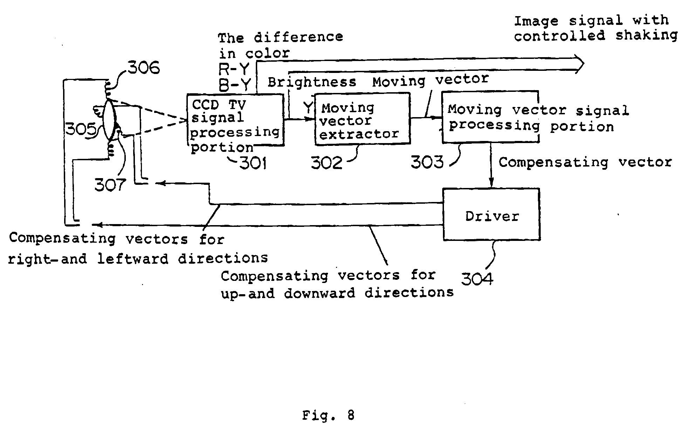

Fig. 8 shows the third embodiment of the present invention, and this is a compensation system for the shaking of VTR with a camera incorporated therein, including a moving vector extractor explained in the above first embodiment.

301 represents CCD TV signal processing portion, 302 is a moving vector extractor, and a moving vector is extracted similarly to the operation of the second embodiment.

The extracted moving vector is inputted into moving vector processing portion 303 and processing is preformed, in which it is judged the reliability of a band filter for determining compensation frequency and of moving vector extraction. Lens 305 is supported by actuators 306 and 307 so as to be movable in two dimensions perpendicular to the optical axis of the lens. It means lens 305 is moved in two dimensions by impressing compensation voltage to the actuators. Compensating vector outputted from moving vector signal processing portion 303 is amplified in driver 304 in the directions of up, down, right and leftward, and by impressing compensation voltage to actuator 306 and 307, the position of lens 305 is compensated. A feed-back loop for compensating movement of an image is constructed.

When the adjustment is necessary for the relative positions between the lens and a light receptor of CCD, the receptor of CCD should be driven together with the lens.

In the embodiment above, an absolute value of the difference between frames is calculated. It is also possible to calculate squared value of the difference value for obtaining the moving vector.

As mentioned above, the present invention has advantages that the result of multi-value correlation is binarized to be accumulated, so the hardware for extracting moving vector is smaller in size due to its simplicity calculation as well as small memory size, than a system accumulating multi-value data.

Also, by using this moving vector extractor, moving extracting system is obtained for compensating shaking of VTR with a camera incorporated therein.

**Claims**

1. Moving vector extractor comprising:

   a means for calculating a difference of brightness of representative points in fields of input image apart by a predetermined time distance from each other;

   a means for obtaining basic data of moving vector through binarizing an indicator indicating said difference as a positive value;and

   a means for accumulating said basic data so as to generate an accumulated data and for finding a local minimum in said accumulated data so as to obtain moving vector from positional relationship between said local minimum and said representative points.

2. Moving vector extractor as claimed in Claim 1, wherein said indicator is an absolute value of said difference.

3. Moving vector extractor as claimed in Claim 1, wherein said indicator is a squared value of said difference.

4. Moving vector extractor as claimed in Claim 1, wherein said field are the same in the meaning of even or odd.

5. Moving vector extractor as claimed in Claim 1, wherein said field area successive and different in the

5

meaning of even or odd.

6. Moving vector extractor as claimed in Claim 5, wherein one of said fields is converted into an interpolated image of field lines consisting of pixels with brightness of mean value of successive fields.

7. Moving vector extractor as claimed in Claim 6, wherein said means for calculating a difference of brightness comprises a pair of representative point memories sequentially connected to said input image and a subtracter for subtracting one of field in latter of said representative point memory and a field newly inputted from the other.

8. Moving vector extractor as claimed in Claim 7, further comprising an absolute value calculator for calculating an absolute value of a calculation executed by said subtracter.

9. Moving vector extractor as claimed in Claim 1, wherein said means for obtaining basic data is a comparator.

10. Moving vector extractor as claimed in Claim 1, wherein said means for accumulating said basic data comprises an adder and accumulated addition memory.

Current frame
image

Representative point
in the previous frame

$$a^n_{d,e}(i,j)$$

$$a^{n-1}_{d,e}(0,0)$$

ABS

$$\mathcal{P}(i,j)$$

Binarizing

Candidate line of
moving vector

$$\sum_e \sum_d$$

Accumulation

Moving vector to be extracted (i, j)

[ Principle of moving vector extraction ]

Fig. 1

7

Frame image

Representative point $a^n_{d,e}(o,o)$

$\left(\text{Selection of representative point}\right)$

Fig. 2

Current frame image
$a^n{}_{d,e}(i,j)$

Previous frame image
$a^{n-1}{}_{d,e}(0,0)$

I

ABS

J

Accumulated value

$\sum_e \sum_d$

Accumulation

K

Moving vector to be extracted $(i, j)$

$\left[\text{Representative point matching method}\right]$

Fig. 3

Fig. 4

Odd field image

Even field image

Interpolation

Interlace
brightness signal

Odd field

Even field

To moving vector
extractor

$\frac{1}{2}$

I H

$\frac{1}{2}$

Delay

Interpolation

Judgment of an
odd/even field

( Interpolation of line )

Fig. 5

11

EP 0 479 323 A2

Fig. 6

Fig. 7

Fig. 8